# EUROPEAN PATENT SPECIFICATION

(11) **EP 3 570 144 B1**
(45) Date of publication and mention of the grant of the patent: **22.02.2023**
(21) Application number: 19174603.1
(22) Date of filing: 15.05.2019
(51) Int. Cl.: G06F 3/01

(54) **ELECTRONIC DEVICE FOR PROVIDING VR/AR CONTENT**
ELEKTRONISCHE VORRICHTUNG ZUR BEREITSTELLUNG VON VR/AR-INHALT
DISPOSITIF ÉLECTRONIQUE POUR FOURNIR UN CONTENU EN RV/RA

(30) Priority: 15.05.2018 KR 20180055300
(43) Date of publication of application: 20.11.2019
(73) Proprietor: Samsung Electronics Co., Ltd., Gyeonggi-do 16677 (KR)
(72) Inventor: PARK, Minkyu, 16677 Gyeonggi-do (KR)
(74) Representative: Nederlandsch Octrooibureau

(56) References cited:
- US-A1- 2012 272 179
- US-A1- 2017 052 373

## Description

### BACKGROUND

### 1. Field

The disclosure relates to a technology for providing a virtual reality/augmented reality (VR/AR) content.

### 2. Description of Related Art

Virtual reality (VR), augmented reality (AR), and mixed reality (MR) content may be provided to a user via a virtual space or a virtual space mixed with the real space. An electronic device may provide a user with a virtual space and may simulate the user's action in the virtual space. The VR, MR and AR content may be used for a variety of purposes, for example, commercial usages such as entertainment and gaming, military usages such as combat or pilot training, educational usages, and the like. Documents US 2012/272179 A1 and US 2017/052373 A1 disclose systems for positioning a cursor with the help of a user's gaze.

### SUMMARY

The present invention is set out in the appended independent claims. Preferred embodiments are provided by the dependent claims.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a view for describing an operating environment of virtual reality/augmented reality (VR/AR) content of an electronic device, according to an embodiment of the disclosure;
FIG. 2 is a block diagram of an electronic device and a control device, according to an embodiment of the disclosure;
FIG. 3 is a flowchart illustrating a method of controlling a pointer corresponding to a control device, according to an embodiment of the disclosure;
FIG. 4 is a view for describing a method of controlling a pointer corresponding to a control device.
FIG. 5 is an example of data for controlling a reaction speed of a pointer corresponding to a control device, according to an embodiment of the disclosure;
FIG. 6 is a view for describing a structure of an electronic device, according to an embodiment of the disclosure;
FIG. 7 illustrates a block diagram of an electronic device, a control device, and a head-mounted display device, according to an embodiment of the disclosure; and
FIG. 8 illustrates an electronic device in a network environment, according to an embodiment of the disclosure.

Throughout the drawings, like reference numerals will be understood to refer to like parts, components, and structures.

### DETAILED DESCRIPTION

The following description with reference to accompanying drawings is provided to assist in a comprehensive understanding of the disclosure as defined by the claims. It includes various specific details to assist in that understanding but these are to be regarded as merely exemplary.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

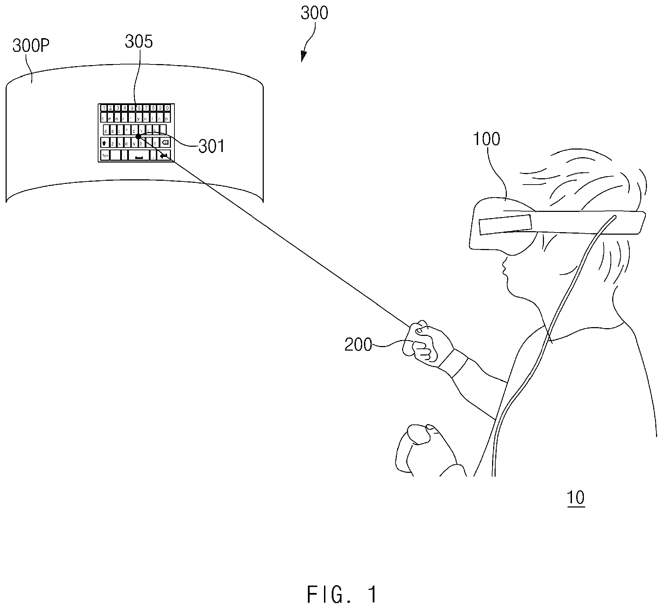

FIG. 1 is a view for describing an operating environment of virtual reality/augmented reality (VR/AR) content of an electronic device, according to an embodiment of the disclosure.

According to an embodiment, an electronic device 100 may provide a user 10 with VR/AR/MR content. The electronic device 100 may output a virtual space 300 according to the execution or playback VR/AR/MR content, and the user 10 may manipulate an object 305 rendered in the virtual space 300. Hereinafter, the VR content among VR content, AR content, and MR content that are capable of providing the virtual space 300 will be described as one example of content for providing the virtual space 300. However, various embodiments of the disclosure are not limited thereto.

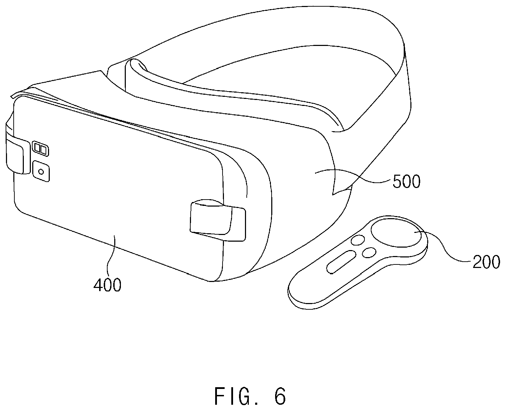

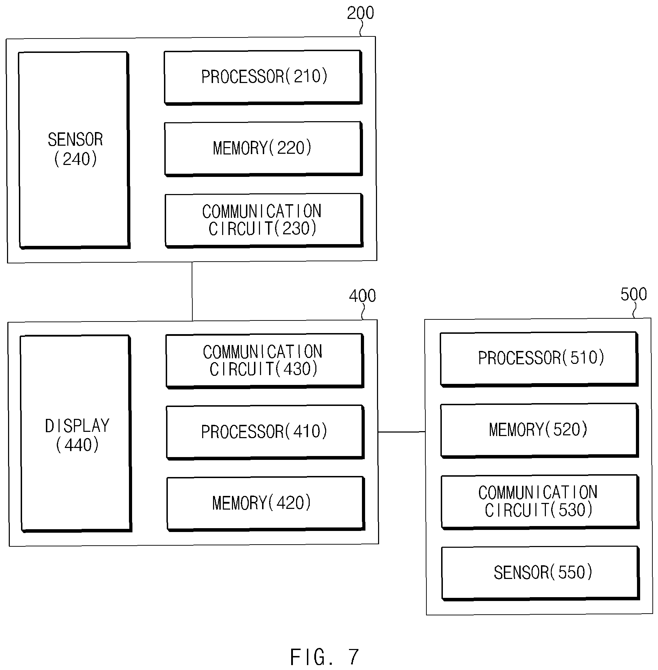

For example, the electronic device 100 may be referred to as a wearable device (e.g., a head-mounted display device) mounted on the head of the user 10. The electronic device 100 may be fixed to the facial side of the user 10, and the virtual space 300 may be displayed by a wearable device. In various embodiments, the electronic device 100 may be implemented to be divided into a head mounted display (HMD) device (e.g., an HMD device 500 of FIG. 6) and an electronic device (e.g., an electronic device 400 of FIG. 6). An embodiment associated with this will be described later with reference to FIGS. 6 and 7.

The electronic device 100 may display a first point 301, to which the control device 200 points, in the virtual space 300. The first point 301 may be referred to as a pointer corresponding to the control device 200. The electronic device 100 may receive information about the motion of the control device 200 from the control device 200 and may move the pointer (e.g., the first point 301) to correspond to the motion of the control device 200. The user 10 may point to the virtual object 305 of the virtual space 300 using the control device 200 and may perform various manipulations on the virtual object 305.

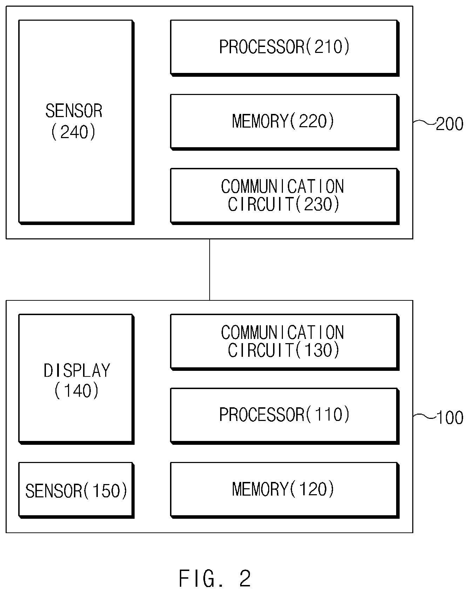

FIG. 2 is a block diagram of an electronic device and a control device, according to an embodiment of the disclosure.

The electronic device 100 according to an embodiment may include a processor 110, a memory 120, a communication circuit 130 (e.g., a transceiver), a display 140, and/or at least one sensor 150. The processor 110 may control the memory 120, the communication circuit 130, the display 140, and the sensor 150. For example, the processor 110 may be referred to as an application processor and/or processor. Hereinafter, it is understood that the operation of the electronic device 100 is performed by the processor 110 of the electronic device 100. In various embodiments, a part of the components included in the electronic device 100 may be implemented as a separate device. For example, the sensor 150 may be a separate device (e.g., the HMD device 500) that communicates with the electronic device 100.

The control device 200 according to an embodiment may include a processor 210, a memory 220, a communication circuit 230 (e.g., a transceiver), and a sensor 240 for sensing the motion of the control device 200. The processor 210 may control the memory 220, the communication circuit 230, and the sensor 240.

In an embodiment, the electronic device 100 may establish a connection with the control device 200 through the communication circuit 130. For example, the electronic device 100 may be connected to the control device 200 via short range wireless communication (e.g., Bluetooth communication).

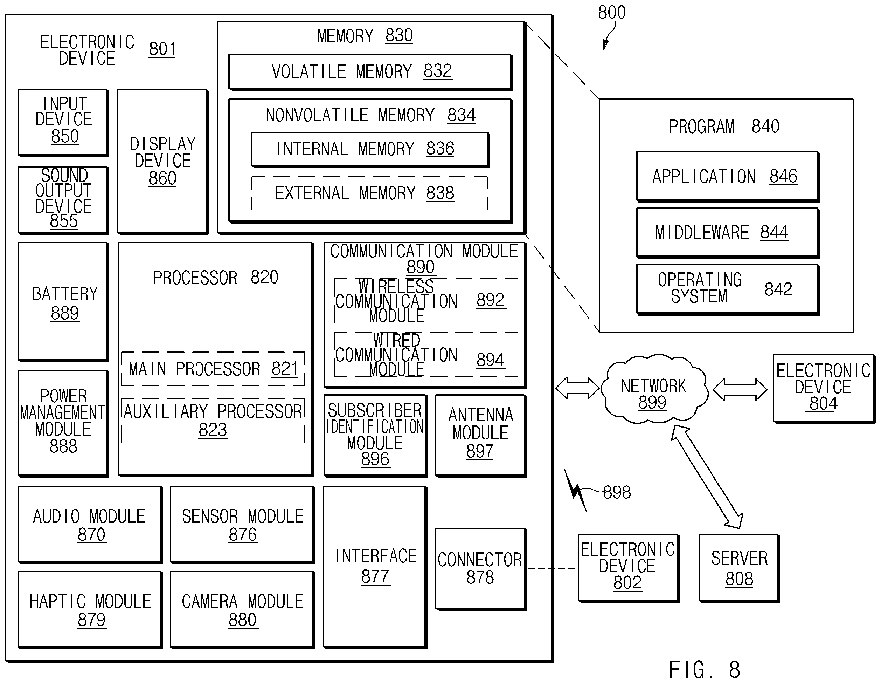

In an embodiment, the electronic device 100 may output the virtual space 300 according to the execution or playback of VR content via the display 140. The virtual space 300 may include the virtual object 305. In another embodiment, the electronic device 100 may display the real space captured via a camera (e.g., a camera module 880 of FIG. 8), on the display 140. The electronic device 100 may display the virtual object 305 rendered depending on the execution or playback of the AR content, in the real space. The real space and the virtual object may be referred to as the virtual space 300 according to another embodiment. The electronic device 100 may receive the action of the user for the virtual space 300 and may simulate the received action.

In an embodiment, the electronic device 100 may display the first point 301 indicated by the control device 200, in the virtual space 300. The first point 301 may be moved to correspond to the motion of the control device 200.

In an embodiment, the control device 200 may include at least one sensor 240 for obtaining motion information of the control device 200. The control device 200 may obtain motion information through the at least one sensor 240 and may transmit the obtained motion information to the electronic device 100. The electronic device 100 may move the first point 301, based on the obtained motion information.

In an embodiment, the electronic device 100 may include at least one sensor 150 for obtaining information about the user's gaze. The electronic device 100 may obtain sensor information via the at least one sensor 150 and may determine the second point corresponding to the user's gaze in the virtual space 300, based on the obtained sensor information.

For example, when at least one of the sensors 150 includes a motion sensor such as a gyro sensor, the electronic device 100 may recognize the direction, in which the front surface of the electronic device 100 faces, via the motion sensor and may determine that the point of the virtual space 300 corresponding to the direction is the second point.

For example, when at least one of the sensors 150 includes an eye tracking sensor, the electronic device 100 may recognize the direction, in which the user's eyes face, via the eye tracking sensor and may determine that the point of the virtual space 300 corresponding to the direction is the second point.

According to the claimed invention, when the motion of the control device 200 occurs, the electronic device 100 moves the first point 301. The electronic device 100 differently controls the movement speed of the first point 301 for the motion of the control device 200, based on the user's gaze. The electronic device 100 may determine the sensitivity of the motion of the control device 200, based on the user's gaze.

According to the claimed invention, the electronic device 100 determines the movement speed of the first point 301, in consideration of a distance between the first point 301 and the second point. As the first point 301 is farther away from the second point, the electronic device 100 moves the first point 301 more quickly; as the first point 301 is closer to the second point, the electronic device 100 moves the first point 301 more slowly. As the pointer of the control device 200 is farther away from the user's gaze, the electronic device 100 moves the pointer of the control device 200 more quickly; as the pointer of the control device 200 is closer to the user's gaze, the electronic device 100 moves the pointer of the control device 200 more slowly.

Referring to FIG. 1, when the user desires to select a point on the virtual object 305, the user's gaze may be positioned on the virtual object 305. As the pointer of the control device 200 is closer to the user's gaze, more detailed manipulation may be required. At this time, the electronic device 100 may reduce the sensitivity of the motion of the control device 200, by lowering the movement speed of the pointer of the control device 200. On the other hand, when the pointer of the control device 200 is farther away from the user's gaze, the electronic device 100 may increase the sensitivity of the motion of the control device 200, by increasing the movement speed of the pointer of the control device 200. As the pointer of the control device 200 is farther away from the user's gaze, the user desires to move the pointer of the control device 200 more quickly, thereby improving the user's convenience.

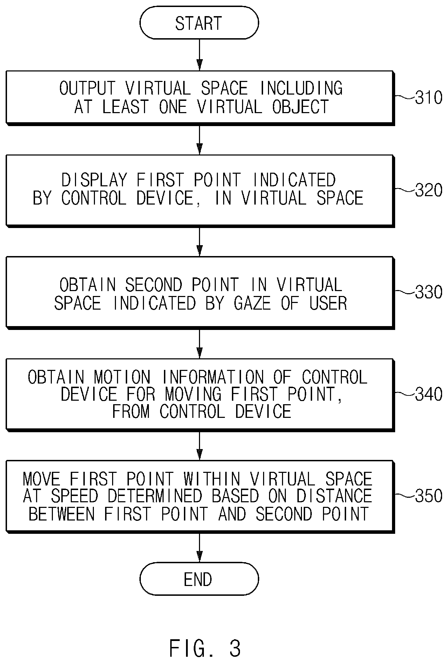

FIG. 3 is a flowchart illustrating a method of controlling a pointer corresponding to a control device, according to an embodiment of the disclosure.

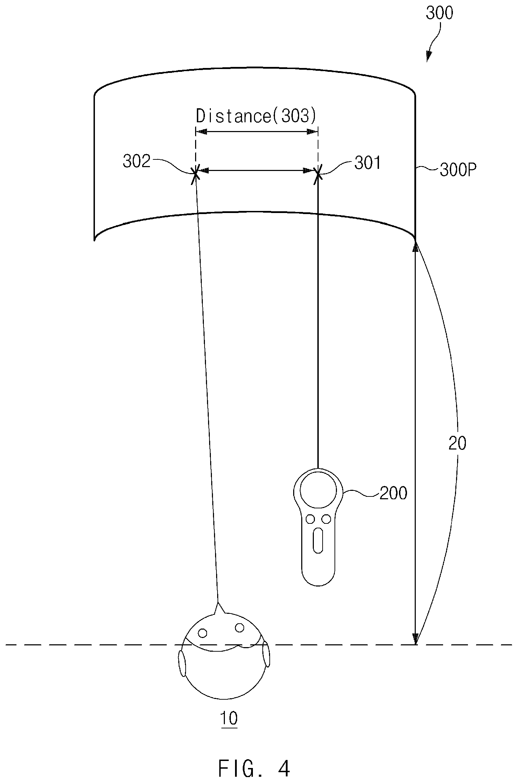

FIG. 4 is a view for describing a method of controlling a pointer corresponding to a control device, according to an embodiment of the disclosure. Hereinafter, a method of controlling a pointer corresponding to a control device will be described with reference to FIGS. 3 and 4.

Referring to FIG. 3, according to an embodiment, the method of authenticating a user may include operation 310 to operation 350. For example, operation 310 to operation 350 may be executed by the electronic device 100 illustrated in FIG. 2. For example, operation 310 to operation 350 may be respectively implemented with instructions capable of being performed (or executed) by the processor 110 of the electronic device 100. The instructions may be stored in, for example, a computer-readable recording medium or the memory 120 of the electronic device 100 illustrated in FIG. 2. Hereinafter, in the descriptions about operation 310 to operation 350, a description the same as the description given with reference to FIG. 2 may not be repeated here.

In operation 310, the electronic device 100 may output the virtual space 300 including at least one virtual object.

In operation 320, the electronic device 100 may display the first point 301 indicated by the control device 200, in the virtual space 300. For example, when the power of the control device 200 is turned on, the electronic device 100 may display the first point 301 at a predetermined reference point.

In operation 330, the electronic device 100 may obtain a second point (e.g., a second point 302 in FIG. 4) in the virtual space 300 indicated by the user's gaze wearing the electronic device 100, based on the sensor information obtained from the sensor 150.

Referring to FIG. 4, the first point 301 and the second point 302 is represented as a three-dimensional vector value from a reference location in the virtual space 300.

In various embodiments, when at least one of the sensors 150 includes an eye tracking sensor, the electronic device 100 may identify the second point 302 based on gaze information obtained from the eye tracking sensor. In various embodiments, when at least one of the sensors 150 includes a motion sensor such as a gyro sensor, the electronic device 100 may obtain the second point 302 based on the posture information of the electronic device 100 obtained from the motion sensor.

In operation 340, the electronic device 100 may obtain motion information of the control device 200 for moving the first point 301, from the control device 200. In operation 350, the electronic device 100 may move the first point 301 based on motion information received from the control device 200. The electronic device 100 may move the first point 301 within the virtual space 300 at a speed determined based on a distance 303 between the first point 301 and the second point 302, in response to the obtaining of motion information. For example, as the distance between the first point 301 and the second point 302 decreases, the electronic device 100 may reduce the movement speed of the first point 301. The motion information may be referred to as information about the motion of the control device 200.

In an embodiment, the at least one sensor 240 of the control device 200 may include a sensor capable of sensing the motion of the control device 200, such as an accelerometer, a gyro sensor, or the like. The at least one sensor 240 of the control device 200 may obtain first motion information including the location, direction, and the like of the control device 200. The control device 200 may transmit the obtained first motion information to the electronic device 100 via the communication circuit 230. The electronic device 100 may move the first point 301 based on the first motion information.

In various embodiments, the electronic device 100 may track the motion of the control device 200, using one or more cameras included in the electronic device 100. The electronic device 100 may obtain second motion information about the control device 200, using a camera. The electronic device 100 may move the first point 301 based on the first motion information and the second motion information.

In various embodiments, the electronic device 100 may operate in conjunction with an external computing device (e.g., a personal computer (PC). The external computing device may perform at least part of operations performed by the processor 110 of the electronic device 100. For example, the electronic device 100 may communicate with an external computing device via a wired connection (e.g., universal serial bus (USB) or high-definition multimedia interface (HDMI)). For example, when operation 340 and operation 350 are performed by an external computing device, the electronic device 100 may transmit first motion information and/or second motion information to the external computing device. Furthermore, the electronic device 100 may transmit motion information of the electronic device 100 and motion information of the control device 200 to the external computing device via the wired connection.

In various embodiments, the control device 200 may communicate with the external computing device via a wireless connection (e.g., Bluetooth (BT). The control device 200 may transmit motion information of the control device 200 and a control input (e.g., button inputs) to the control device 200, to the external computing device. The external computing device may move the first point 301, using the received motion information and the received control input.

In various embodiments, an external sensor (e.g., a motion sensor) may track the motion of the electronic device 100 and the control device 200. The electronic device 100 may receive sensor information about the electronic device 100 from the external sensor. The electronic device 100 may obtain the second point 302 in the virtual space 300 indicated by the gaze of a user wearing the electronic device 100, based on the sensor information obtained from an external sensor. The electronic device 100 may receive sensor information about the control device 200, from the external sensor. The electronic device 100 may move the first point 301, based on the sensor information about the control device 200 received from the external sensor and the motion information received from the control device 200. According to various embodiments, when a part of operations of the electronic device 100 is performed by the external computing device, the external sensor may transmit, to the external computing device, the sensor information obtained with respect to the electronic device 100 and the control device 200. The external computing device may control the movement of each of the first point 301 and the second point 302 based on the pieces of sensor information.

In various embodiments, the virtual space 300 may include a plane 300p spaced apart from the reference location (e.g., the eye of the user 10) of the virtual space 300 by a first distance 20 (e.g., depth). For example, the virtual space 300 may include the plane 300p, which has a depth and which is spaced apart from the reference location by the first distance 20 in a specified direction (e.g., z-axis direction). The first distance 20 may be set in advance to an appropriate distance, in consideration of the readability of the virtual object (e.g., the virtual object 305 of FIG. 1) output by the VR content. As the first distance 20 becomes longer, the first point 301 may greatly move depending on the motion of the control device 200. Accordingly, the first point 301 may be shaken by the fine motion of the user's hand shake, or the like, and it may be difficult for the user to locate the first point 301 at the target point. The accuracy of manipulation may increase by reducing the sensitivity of the control device 200 when the user's gaze is close to the pointer of the control device 200.

For example, the first point 301 and the second point 302 may be positioned at the plane 300p. In this case, the first point 301 and the second point 302 may have a two-dimensional coordinate value on the plane 300p.

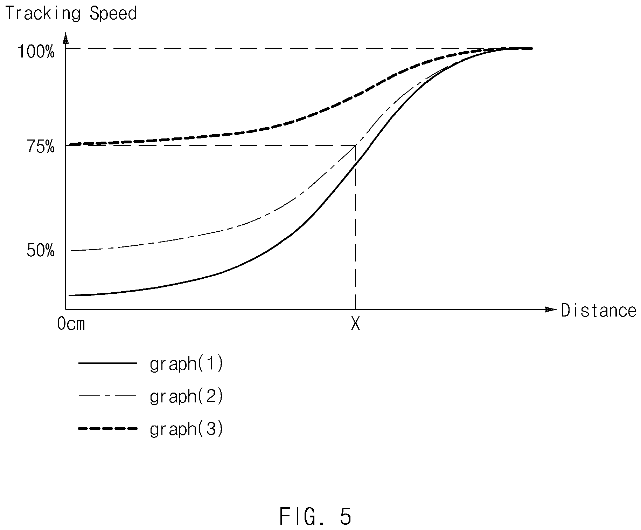

FIG. 5 is an example of data for controlling a reaction speed of a pointer corresponding to a control device, according to an embodiment of the disclosure.

In various embodiments, the electronic device 100 may determine the speed based on the pre-stored data and the distance between first point 301 and the second point 302. The data may be stored in advance in the memory 120 of the electronic device 100. For example, the pre-stored data may include information about the speed value corresponding to the distance between the first point 301 and the second point 302.

In various embodiments, the pre-stored data may include a plurality of primary graphs, in each of which 'x' value is the distance and 'y' value is the speed corresponding to the distance. For example, the graphs may be stored in the memory 120 in the form of a table in which 'x' value and 'y' value are mapped to each other.

Referring to graph 1 to graph 3 of FIG. 5, the sensitivity of the motion of the control device 200 may increase from graph 3 to graph 1. In other words, the movement speed of the first point 301 may further decrease graph 3 to graph 1 as the distance between the first point 301 and the second point 302 becomes shorter. Accordingly, when the electronic device 100 controls the motion of the first point 301 based on the data of graph 3, the movement speed of the first point 301 may be fast, but it may be difficult to finely manipulate the first point 301. When the electronic device 100 controls the motion of the first point 301 based on the data of graph 1, the movement speed of the first point 301 may be slow, but it may be possible to finely manipulate the first point 301.

For example, the electronic device 100 may calculate, in real time, the distance between the first point 301 and the second point 302, which varies depending on the movement of the first point 301, and may determine the speed corresponding to the distance calculated in the real time, with reference to the pre-stored data.

In various embodiments, the electronic device 100 may store information about the sensitivity corresponding to a specific user. The user may designate the preferred sensitivity in advance. The electronic device 100 may control the first point depending on the specified sensitivity for each user. For example, graph 1 to graph 3 may be referred to as a setting item of sensitivity 1 to sensitivity 3. The user may select the preferred sensitivity from items of sensitivity 1 to sensitivity 3.

FIG. 6 is a view for describing a structure of an electronic device, according to an embodiment of the disclosure.

FIG. 7 illustrates a block diagram of an electronic device, a control device, and a head-mounted display device, according to an embodiment of the disclosure.

In various embodiments, an electronic device 400 (e.g., the electronic device 100) may provide VR/AR/MR content via an HMD device 500. The electronic device 400 may be coupled to the HMD device 500. For example, the electronic device 400 may be connected to the HMD device 500 via a wired interface (e.g., USB) in a docking manner. A user (e.g., the user 10 of FIG. 1) may watch the virtual space displayed by the electronic device 400, via the HMD device 500 and may perform an action on the virtual space, using the control device 200 (e.g., the control device 200 of FIG. 2).

For example, the control device 200 may correspond to the control device 200 of FIG. 2. The electronic device 100 described above in FIG. 2 may be implemented to be divided into the electronic device 400 and the HMD device 500 of FIG. 6. Hereinafter, the description about of components the same as the components described above in FIG. 2 may be omitted.

Referring to FIG. 7, the electronic device 400 may include a processor 410, a memory 420, a communication circuit 430 (e.g., a transceiver), and a display 440. The HMD device 500 may include a processor 510, a memory 520, a communication circuit 530 (e.g., a transceiver), and at least one sensor 550.

In an embodiment, the electronic device 400 may communicate with the HMD device 500 and the control device 200 via the communication circuit 430. The electronic device 400 may control the first point 301 indicated by the control device 200 in the virtual space 300, based on motion information received from the control device 200 via the communication circuit 430. For example, the electronic device 400 and the control device 200 may perform Bluetooth communication. The electronic device 400 may obtain a second point in the virtual space 300 indicated by the gaze of the user wearing the HMD device 500, based on information received from the HMD device 500 via the communication circuit 430.

For example, the at least one sensor 550 of the HMD device 500 may include a motion sensor such as a gyro sensor. The HMD device 500 may obtain the posture information of the HMD device 500 via the motion sensor. The HMD device 500 may transmit the posture information to the electronic device 400 via the communication circuit 530. The electronic device 400 may determine that the point of the virtual space 300 corresponding to a direction, in which the front surface of the HMD device 500 faces, is the second point, based on the obtained posture information.

For example, the at least one sensor 550 may include an eye tracking sensor. The HMD device 500 may obtain gaze information of the user via the eye tracking sensor. The HMD device 500 may transmit the gaze information to the electronic device 400 via the communication circuit 530. The electronic device 400 may determine that the point of the virtual space 300 corresponding to a direction, in which the user's eyeball faces, is the second point, based on the obtained gaze information.

The motion of the first point may be controlled in the same manner as the electronic device 100 of FIG. 2. In an embodiment, the electronic device 400 may obtain motion information of the control device 200 for moving the first point 301 from the control device 200 and may move the first point 301 in the virtual space 300 at a speed determined based on the distance between the first point 301 and the second point 302, in response to the obtaining of motion information.

In various embodiments, the electronic device 400 may be connected to the HMD device 500, and the control device 200 may be connected to the HMD device 500. For example, the electronic device 400 may communicate with the HMD device 500 via a wired connection (e.g., USB or HDMI), and the control device 200 may communicate with the HMD device 500 via a wireless connection (e.g., Bluetooth). At this time, the electronic device 400 may not be connected to the control device 200, but may perform communication via the HMD device 500. The HMD device 500 may receive the first motion information (e.g., the first motion information of FIG. 3) of the control device 200 and the control input (e.g., the control input of FIG. 3) to the control device 200, from the control device 200. The HMD device 500 may obtain second motion information (e.g., second motion information in FIG. 3) of the control device 200, using a camera included in the HMD device 500. The HMD device 500 may obtain motion information about the HMD device 500 itself by using the sensor 550. The HMD device 500 may transmit the first motion information, the control input, the second motion information, and the motion information of the HMD device 500, to the electronic device 400. The electronic device 400 may perform the above-described operation of the electronic device 400 based on the information received from the HMD device 500.

FIG. 8 is a block diagram illustrating an electronic device 801 in a network environment 800 according to various embodiments.

Referring to FIG. 8, the electronic device 801 in the network environment 800 may communicate with an electronic device 802 via a first network 898 (e.g., a short-range wireless communication network), or an electronic device 804 or a server 808 via a second network 899 (e.g., a long-range wireless communication network). According to an embodiment, the electronic device 801 may communicate with the electronic device 804 via the server 808. According to an embodiment, the electronic device 801 may include a processor 820, memory 830, an input device 850, a sound output device 855, a display device 860, an audio module 870, a sensor module 876, an interface 877, a haptic module 879, a camera module 880, a power management module 888, a battery 889, a communication module 890, a subscriber identification module (SIM) 896, or an antenna module 897. In some embodiments, at least one (e.g., the display device 860 or the camera module 880) of the components may be omitted from the electronic device 801, or one or more other components may be added in the electronic device 801. In some embodiments, some of the components may be implemented as single integrated circuitry. For example, the sensor module 876 (e.g., a fingerprint sensor, an iris sensor, or an illuminance sensor) may be implemented as embedded in the display device 860 (e.g., a display).

The processor 820 may execute, for example, software (e.g., a program 840) to control at least one other component (e.g., a hardware or software component) of the electronic device 801 coupled with the processor 820, and may perform various data processing or computation. According to one embodiment, as at least part of the data processing or computation, the processor 820 may load a command or data received from another component (e.g., the sensor module 876 or the communication module 890) in volatile memory 832, process the command or the data stored in the volatile memory 832, and store resulting data in non-volatile memory 834. According to an embodiment, the processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or to be specific to a specified function. The auxiliary processor 823 may be implemented as separate from, or as part of the main processor 821.

The auxiliary processor 823 may control at least some of functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). According to an embodiment, the auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thererto. The memory 830 may include the volatile memory 832 or the non-volatile memory 834.

The program 840 may be stored in the memory 830 as software, and may include, for example, an operating system (OS) 842, middleware 844, or an application 846.

The input device 850 may receive a command or data to be used by other component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or playing record, and the receiver may be used for incoming calls. According to an embodiment, the receiver may be implemented as separate from, or as part of the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. According to an embodiment, the display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. According to an embodiment, the audio module 870 may obtain the sound via the input device 850, or output the sound via the sound output device 855 or a headphone of an external electronic device (e.g., an electronic device 802) directly (e.g., wiredly) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. According to an embodiment, the sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device (e.g., the electronic device 802) directly (e.g., wiredly) or wirelessly. According to an embodiment, the interface 877 may include, for example, a high definition multimedia interface (HDMI), a universal serial bus (USB) interface, a secure digital (SD) card interface, or an audio interface.

A connecting terminal 878 may include a connector via which the electronic device 801 may be physically connected with the external electronic device (e.g., the electronic device 802). According to an embodiment, the connecting terminal 878 may include, for example, a HDMI connector, a USB connector, a SD card connector, or an audio connector (e.g., a headphone connector).

The haptic module 879 may convert an electrical signal into a mechanical stimulus (e.g., a vibration or a movement) or electrical stimulus which may be recognized by a user via his tactile sensation or kinesthetic sensation. According to an embodiment, the haptic module 879 may include, for example, a motor, a piezoelectric element, or an electric stimulator.

The camera module 880 may capture a still image or moving images. According to an embodiment, the camera module 880 may include one or more lenses, image sensors, image signal processors, or flashes.

The power management module 888 may manage power supplied to the electronic device 801. According to one embodiment, the power management module 888 may be implemented as at least part of, for example, a power management integrated circuit (PMIC).

The battery 889 may supply power to at least one component of the electronic device 801. According to an embodiment, the battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the application processor (AP)) and supports a direct (e.g., wired) communication or a wireless communication. According to an embodiment, the communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as Bluetooth^{™}, wireless-fidelity (Wi-Fi) direct, or infrared data association (IrDA)) or the second network 899 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. According to an embodiment, the antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 801 and the external electronic device 804 via the server 808 coupled with the second network 899. Each of the electronic devices 802 and 804 may be a device of a same type as, or a different type, from the electronic device 801. According to an embodiment, all or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

The electronic device according to the claimed invention is a user-wearable electronic device.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 840) including one or more instructions that are stored in a storage medium (e.g., internal memory 836 or external memory 838) that is readable by a machine (e.g., the electronic device 801). For example, a processor (e.g., the processor 820) of the machine (e.g., the electronic device 801) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to various embodiments of the disclosure, the reaction speed of the control device may be controlled depending on a user's gaze and the distance between two pointers defined in the virtual space in response to a control device. The accuracy and convenience of manipulation by a control device may be improved.

Besides, a variety of effects directly or indirectly understood through this disclosure may be provided.

## Claims

1. A user-wearable electronic device (100) comprising:
at least one sensor (150);
a display (140);
a memory configured to store instructions (120);
a communication circuit (130); and
at least one processor (110) configured to:
establish a connection between the electronic device and a control device (200), using the communication circuit,
output (310) a virtual space (300) including at least one virtual object (305), using the display (140),
display (320) a first point (301) indicated by the control device, in the virtual space, wherein the first point has a three-dimensional vector value in the virtual space,
obtain (330) a second point (302) in the virtual space, which is indicated by a gaze of a user wearing the electronic device, based on sensor information obtained from the at least one sensor, wherein the second point has a three-dimensional vector value in the virtual space,
obtain (340) motion information of the control device from the control device, and **characterized in that** the at least one processor is further configured to:
move (350) the first point in the virtual space, depending on the motion information, at a speed determined based on a distance between the first point and the second point, in response to obtaining the motion information, and decrease the speed as the distance between the first point and the second point decreases.

2. The electronic device of claim 1, wherein the first point and the second point are positioned on a plane spaced apart from a reference location by a first distance in the virtual space.

3. The electronic device of claim 2, wherein each of the first point and the second point has two-dimensional coordinates on the plane.

4. The electronic device of claim 2, wherein the plane has a depth corresponding to the first distance.

5. The electronic device of claim 1,
wherein the at least one sensor includes an eye tracking sensor, and
wherein the at least one processor is further configured to obtain the second point based on gaze information obtained from the eye tracking sensor.

6. The electronic device of claim 1,
wherein the at least one sensor includes a gyro sensor, and
wherein the at least one processor is further configured to obtain the second point based on posture information of the electronic device obtained from the gyro sensor.

7. The electronic device of claim 1, wherein the memory is configured to store information about the speed corresponding to the distance, and wherein the at least one processor is further configured to determine the speed based on the distance and the information.

8. The electronic device of claim 7, wherein the information includes a plurality of primary graphs on a plane 'x-y', in which 'x' value is the distance and 'y' value is the speed corresponding to the distance.

9. The electronic device of claim 8, wherein the at least one processor is further configured to determine the speed based on a predetermined first graph of the plurality of primary graphs.

10. The electronic device of claim 9, wherein the first graph is specified by a user.

11. The electronic device of claim 7, wherein the information is stored after being mapped to a specific user.

12. The electronic device of claim 7, wherein the at least one processor is further configured to determine the speed corresponding to the distance changed in real time, based on the information.

## Patentansprüche

1. Vom Benutzer tragbare elektronische Vorrichtung (100), die Folgendes umfasst:
mindestens einen Sensor (150);
ein Display (140);
einen Speicher, der zum Speichern von Anweisungen (120) konfiguriert ist;
eine Kommunikationsschaltung (130); und
mindestens einen Prozessor (110), der konfiguriert ist zum:
Herstellen einer Verbindung zwischen der elektronischen Vorrichtung und einer Steuervorrichtung (200) unter Verwenden der Kommunikationsschaltung,
Ausgeben (310) eines virtuellen Raums (300) einschließlich mindestens eines virtuellen Objekts (305) unter Verwenden des Displays (140),
Anzeigen (320) eines ersten Punkts (301), der von der Steuervorrichtung angezeigt wird, in dem virtuellen Raum, wobei der erste Punkt einen dreidimensionalen Vektorwert in dem virtuellen Raum hat,
Erhalten (330) eines zweiten Punkts (302) in dem virtuellen Raum, der durch einen Blick eines Benutzers angezeigt wird, der die elektronische Vorrichtung trägt, basierend auf Sensorinformationen, die von dem mindestens einen Sensor erhalten werden, wobei der zweite Punkt einen dreidimensionalen Vektorwert in dem virtuellen Raum hat,
Erhalten (340) von Bewegungsinformationen der Steuervorrichtung von der Steuervorrichtung, und **gekennzeichnet dadurch, dass** der mindestens eine Prozessor ferner konfiguriert ist zum:
Bewegen (350) des ersten Punkts in dem virtuellen Raum in Abhängigkeit von den Bewegungsinformationen mit einer Geschwindigkeit, die basierend auf einer Distanz zwischen dem ersten Punkt und dem zweiten Punkt bestimmt wird, als Antwort auf das Erhalten der Bewegungsinformationen, und Verringern der Geschwindigkeit, wenn die Distanz zwischen dem ersten Punkt und dem zweiten Punkt abnimmt.

2. Elektronische Vorrichtung nach Anspruch 1, wobei der erste Punkt und der zweite Punkt auf einer Ebene positioniert sind, die von einem Referenzstandort um eine erste Distanz in dem virtuellen Raum beabstandet ist.

3. Elektronische Vorrichtung nach Anspruch 2, wobei sowohl der erste Punkt als auch der zweite Punkt zweidimensionale Koordinaten auf der Ebene haben.

4. Elektronische Vorrichtung nach Anspruch 2, wobei die Ebene eine Tiefe hat, die der ersten Distanz entspricht.

5. Elektronische Vorrichtung nach Anspruch 1,
wobei der mindestens eine Sensor einen Augenverfolgungssensor enthält, und
wobei der mindestens eine Prozessor ferner konfiguriert ist, um den zweiten Punkt basierend auf Blickinformationen zu erhalten, die von dem Augenverfolgungssensor erhalten werden.

6. Elektronische Vorrichtung nach Anspruch 1,
wobei der mindestens eine Sensor einen Gyrosensor enthält, und
wobei der mindestens eine Prozessor ferner konfiguriert ist, um den zweiten Punkt basierend auf Haltungsinformationen der elektronischen Vorrichtung zu erhalten, die von dem Gyrosensor erhalten werden.

7. Elektronische Vorrichtung nach Anspruch 1, wobei der Speicher konfiguriert ist, um Informationen über die der Distanz entsprechende Geschwindigkeit zu speichern, und wobei der mindestens eine Prozessor ferner konfiguriert ist, um die Geschwindigkeit basierend auf der Distanz und den Informationen zu bestimmen.

8. Elektronische Vorrichtung nach Anspruch 7, wobei die Informationen eine Vielzahl von primären Graphen auf einer Ebene 'x-y' enthalten, in der der 'x'- Wert die Distanz ist und der 'y'-Wert die der Distanz entsprechende Geschwindigkeit ist.

9. Elektronische Vorrichtung nach Anspruch 8, wobei der mindestens eine Prozessor ferner konfiguriert ist, um die Geschwindigkeit basierend auf einem vorbestimmten ersten Graphen aus der Vielzahl von primären Graphen zu bestimmen.

10. Elektronische Vorrichtung nach Anspruch 9, wobei der erste Graph von einem Benutzer spezifiziert wird.

11. Elektronische Vorrichtung nach Anspruch 7, wobei die Informationen gespeichert werden, nachdem sie einem spezifischen Benutzer zugeordnet wurden.

12. Elektronische Vorrichtung nach Anspruch 7, wobei der mindestens eine Prozessor ferner konfiguriert ist, um die Geschwindigkeit, die der in Echtzeit geänderten Distanz entspricht, basierend auf den Informationen zu bestimmen.

## Revendications

1. Dispositif électronique portable par l'utilisateur (100) comprenant :
au moins un capteur (150) ;
une unité d'affichage (140) ;
une mémoire configurée pour stocker des instructions (120) ;
un circuit de communication (130) ; et
au moins un processeur (110) configuré pour :
établir une connexion entre le dispositif électronique et un dispositif de commande (200), en utilisant le circuit de communication,
délivrer (310) un espace virtuel (300) incluant au moins un objet virtuel (305), en utilisant l'unité d'affichage (140),
afficher (320) un premier point (301) indiqué par le dispositif de commande, dans l'espace virtuel, où le premier point a une valeur vectorielle tridimensionnelle dans l'espace virtuel,
obtenir (330) un deuxième point (302) dans l'espace virtuel, qui est indiqué par un regard fixe d'un utilisateur portant le dispositif électronique, sur la base d'informations de capteur obtenues à partir de l'au moins un capteur, où le deuxième point a une valeur vectorielle tridimensionnelle dans l'espace virtuel,
obtenir (340) des informations de mouvement du dispositif de commande à partir du dispositif de commande, et **caractérisé en ce que** l'au moins un processeur est en outre configuré pour :
déplacer (350) le premier point dans l'espace virtuel, en fonction des informations de mouvement, à une vitesse déterminée sur la base d'une distance entre le premier point et le deuxième point, en réponse à l'obtention des informations de mouvement, et
diminuer la vitesse à mesure que la distance entre le premier point et le deuxième point diminue.

2. Dispositif électronique selon la revendication 1, où le premier point et le deuxième point sont positionnés sur un plan espacé d'un emplacement de référence par une première distance dans l'espace virtuel.

3. Dispositif électronique selon la revendication 2, où chacun du premier point et du deuxième point a des coordonnées bidimensionnelles sur le plan.

4. Dispositif électronique selon la revendication 2, où le plan a une profondeur correspondant à la première distance.

5. Dispositif électronique selon la revendication 1,
où l'au moins un capteur comprend un capteur de suivi oculaire, et
où l'au moins un processeur est en outre configuré pour obtenir le deuxième point sur la base d'informations de regard fixe obtenues à partir du capteur de suivi oculaire.

6. Dispositif électronique selon la revendication 1,
où l'au moins un capteur comprend un capteur gyroscopique, et
où l'au moins un processeur est en outre configuré pour obtenir le deuxième point sur la base d'informations de posture du dispositif électronique obtenues à partir du capteur gyroscopique.

7. Dispositif électronique selon la revendication 1, où la mémoire est configurée pour stocker des informations sur la vitesse correspondant à la distance, et où l'au moins un processeur est en outre configuré pour déterminer la vitesse sur la base de la distance et des informations.

8. Dispositif électronique selon la revendication 7, où les informations comprennent une pluralité de graphiques primaires sur un plan 'x-y', où la valeur 'x' est la distance et la valeur 'y' est la vitesse correspondant à la distance.

9. Dispositif électronique selon la revendication 8, où l'au moins un processeur est en outre configuré pour déterminer la vitesse sur la base d'un premier graphique prédéterminé de la pluralité de graphiques primaires.

10. Dispositif électronique selon la revendication 9, où le premier graphique est spécifié par un utilisateur.

11. Dispositif électronique selon la revendication 7, où les informations sont stockées après avoir été mappées à un utilisateur spécifique.

12. Dispositif électronique selon la revendication 7, où l'au moins un processeur est en outre configuré pour déterminer la vitesse correspondant à la distance modifiée en temps réel, sur la base des informations.
